# EUROPÄISCHE PATENTSCHRIFT

(11) **EP 2 773 885 B1**
(45) Veröffentlichungstag und Bekanntmachung des Hinweises auf die Patenterteilung: **07.03.2018**
(21) Anmeldenummer: 12777894.2
(22) Anmeldetag: 17.10.2012
(51) Int. Cl.: F16H 3/56, B60K 17/28

(54) **LASTSCHALTGETRIEBE**
POWER SHIFT TRANSMISSION
BOÎTE DE VITESSES AVEC COMMANDE SOUS CHARGE

(30) Priorität: 31.10.2011 DE 102011085496
(43) Veröffentlichungstag der Anmeldung: 10.09.2014
(73) Patentinhaber: Deere & Company, Moline, IL 61265 (US)
(72) Erfinder: OTTEN, Ulrich, 67396 Speyer (DE); SCHALLER, Martin, 64732 Bad könig (DE)
(74) Vertreter: Reichert, Christian
(86) Internationale Anmeldenummer: PCT/EP2012/070542
(87) Internationale Veröffentlichungsnummer: WO 2013/064371

(56) Entgegenhaltungen:
- EP-A1- 0 054 253
- DE-A1- 4 112 330
- FR-A- 1 234 378
- US-A- 3 774 475

## Beschreibung

Die Erfindung betrifft ein Lastschaltgetriebe mit einer Eingangswelle, einer koaxial zur Eingangswelle angeordneten ersten Ausgangswelle, einem Planetengetriebe mit einem mit der Eingangswelle in Verbindung stehenden Planetenträger und wenigstens einem Stufenplanetensatz, wobei der Stufenplanetensatz eingangsseitig und ausgangsseitig mit jeweils einem Sonnenrad kämmt, und wenigstens zwei Schaltelementen.

Lastschaltgetriebe mit verschiedenen Übersetzungsstufen, bei welchen die Umschaltung zwischen den verschiedenen Übersetzungsstufen in Abhängigkeit von der Belastung bzw. einer benötigten Fahrgeschwindigkeit erfolgt, sind bekannt und werden seit vielen Jahren insbesondere in der Automobilindustrie eingesetzt.

Es ist ferner bekannt, derartige Getriebe in Verbindung mit Planetengetrieben und Kupplungen in einem Baukastensystem auszubilden, so dass das Lastschaltgetriebe, durch entsprechende Ausbildung und Anordnung der Zahnradpaarungen des Planetengetriebes, in verschiedenen Betriebsmodi, wie Durchtriebsmodus, Untersetzungsmodus oder Reversiermodus betrieben werden kann. So werden an Traktoren des Landmaschinenherstellers John Deere Lastschaltgetriebe als Getriebevorstufe eingesetzt, die je nach Ausbildung eines Stufenplanetensatzes entweder in den Betriebsmodi Durchtriebsmodus oder Reversiermodus oder in den Betriebsmodi Durchtriebsmodus oder Untersetzungsmodus betrieben werden kann. Das genannte Getriebe zeichnet sich dadurch aus, dass in einer ersten Schaltung eine mit einer Eingangswelle verbundene Kupplung die Eingangswelle mit der Ausgangswelle verbindet, so dass das Getriebe im Durchtriebsmodus betrieben werden kann, wobei das Planetengetriebe frei läuft. In einer zweiten Schaltung wird die Kupplung gelöst, so dass der Planetenträger durch die Eingangswelle angetrieben wird und sich der Planetensatz um ein durch eine Bremse festgestelltes erstes Sonnenrad wälzt, durch welches sich die Abtriebswelle erstreckt. Der Abtrieb erfolgt über ein zweites mit der Abtriebswelle verbundenes Sonnenrad, welches von dem Planetensatz angetrieben wird. Je nach Anordnung des Planetensatzes bzw.

Ausbildung der Zahnradsätze von Planetensatz und Sonnenrädern kann das Lastschaltgetriebe im Untersetzungsmodus oder im Reversiermodus betrieben werden. Ein Lastschaltgetriebe der oben genannten Art mit allen Merkmalen des Oberbegriffs des Patentanspruchs 1 wird in EP0054253A1 offenbart.

Somit wird ein zweistufiges Lastschaltgetriebe bereitgestellt, welches jedoch zum einen fertigungstechnisch aufwändig ausgebildet ist und zum anderen einen weiteren Betriebsmodus, beispielsweise einen Kriechgangmodus, in der genannten Anordnung nicht zulässt.

Die der Erfindung zugrunde liegende Aufgabe wird darin gesehen, ein Lastschaltgetriebe der eingangs genannten Art anzugeben, durch welches die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird ein Lastschaltgetriebe der eingangs genannten Art derart ausgebildet, dass mit einem ersten Schaltelement die erste Ausgangswelle mit dem ausgangsseitigen Sonnenrad des Stufenplanetensatzes verbindbar ist und mit einem zweiten Schaltelement die erste Ausgangswelle direkt mit der Eingangswelle verbindbar ist, wobei das eingangsseitige Sonnenrad des Stufenplanetensatzes drehfest mit einem Gehäuseteil des Lastschaltgetriebes verbunden ist. Sonnenräder und Stufenplanetensatz sind damit derart angeordnet, dass durch Ausbildung von drei austauschbaren Zahnrädersätzen von Sonnenrädern und Stufenplanetensatz bei jeweils einem ausgebildeten Zahnrädersatz zwei Betriebsmodi durch Schalten der Schaltelemente betreibbar sind. Ferner wird eine extrem kompakte Anordnung geschaffen, die zudem konstruktiv einfach zu fertigen ist, da unter anderem auch auf ein Hohlrad im Planetengetriebe gänzlich verzichtet werden kann, so dass der Aufwand von Fertigungsmaßnahmen minimiert wird. Ausgangsseitig bedeutet hier, dass das Sonnenrad auf der Ausgangswellenseite des Planetensatzes angeordnet ist. Eingangsseitig bedeutet hingegen, dass das Sonnenrad auf der Eingangswellenseite des Planetensatzes angeordnet ist. Die kompakte Anordnung, insbesondere die Ausführung der Ausgangswelle und der damit verbundenen Konstruktionselemente des Lastschaltgetriebes, stellt ferner eine konstruktiv einfach zu fertigende Form mit geringen Massenträgheiten dar, wodurch insbesondere auch die Schaltzeiten für ein an das Lastschaltgetriebe koppelbares Synchrongetriebe deutlich reduziert bzw. die Schaltperformance bzw. das Schaltverhalten verbessert werden. Insgesamt führt dies gegenüber anderen bekannten Lastschaltgetrieben zu einer deutlichen Wirkunsgradsteigerung.

Eine direkte Verbindung des ausgangsseitigen Sonnenrads oder der Eingangswelle (bzw. des Planetenträgers, der mit der Eingangswelle direkt verbunden sein kann) mit der ersten Ausgangswelle erfolgt vorzugsweise jeweils durch Schließen des entsprechenden Schaltelements, wobei für jeden Betriebsmodus des Lastschaltgetriebes jeweils ein Schaltelement geschlossen ist. Der Begriff Schaltelemente ist hier und im Folgenden, insbesondere in den Patentansprüchen, stellvertretend für Einrichtungen zu verstehen, mit denen drehende Getriebekomponenten miteinander in drehfeste Verbindung gebracht und wieder gelöst werden können. Diesbezüglich können beispielsweise Lamellenkupplungen oder Klauenkupplungen oder dergleichen eingesetzt werden.

Das eingangsseitige Sonnenrad kann koaxial zur Eingangswelle angeordnet sein, wobei sich die Eingangswelle durch das eingangsseitige Sonnenrad erstreckt. Das eingangsseitige Sonnenrad ist dabei drehfest mit einem Gehäuseteil des Lastschaltgetriebes verbunden und kann beispielsweise auf einer koaxial zur Eingangswelle gelagerten Hohlwelle, die mit dem Gehäuseteil fest verbunden ist, drehfest gelagert sein oder selbst als Hohlrad mit Außenverzahnung mit dem Gehäuseteil fest verbunden werden. Auch andere Anordnungen sind hier denkbar, solange gewährleistet ist, dass das eingangsseitige Sonnenrad drehfest am Gehäuseteil befestigt ist.

Die erste Ausgangswelle kann als Hohlwelle ausgebildet sein, durch welche sich eine mit der Eingangswelle verbundene zweite Ausgangswelle erstreckt. Die zweite Ausgangswelle ist dabei über eine starre Kupplung oder Verdrehsicherung mit der Eingangswelle verbunden. Die zweite Ausgangswelle kann beispielsweise als Antrieb für ein Zapfwellengetriebe dienen oder kann selbst als Zapfwelle ausgebildet sein.

Das erste und das zweite Schaltelement können jeweils als Kupplung ausgebildet sein, wobei die eine Kupplung eingangsseitig mit dem ausgangsseitigen Sonnenrad und ausgangsseitig mit der ersten Ausgangswelle und die andere Kupplung eingangsseitig mit dem Planetenträger und ausgangsseitig mit der ersten Ausgangswelle drehfest verbunden sind. Durch Verbinden beider Kupplungsteile einer der beiden Kupplungen, dass heißt durch Schließen einer der beiden Kupplungen, wird somit die erste Ausgangswelle mit dem ausgangsseitigen Sonnenrad oder dem Planetenträger verbunden. Auch andere Anordnungen sind hier denkbar, solange gewährleistet ist, dass das ausgangsseitige Sonnenrad oder der Planetenträger unabhängig voneinander durch Schaltelemente direkt oder indirekt mit der ersten Ausgangswelle drehfest in Verbindung gebracht werden können und somit einen mit der ersten Ausgangswelle verbundenen oder einen von der ersten Ausgangswelle getrennten Betriebszustand einnehmen können.
Der Stufenplanetensatz und die Sonnenräder können derart ausgebildet sein, dass das Lastschaltgetriebe im Durchtriebsmodus oder im Untersetzungsmodus betreibbar ist. In dieser Ausbildung ist das mit dem eingangsseitigen Sonnenrad kämmende Planetenrad des Stufenplanetensatzes größer ausgebildet als das mit dem ausgangsseitigen Sonnenrad kämmende Planetenrad des Stufenplanetensatzes, wobei durch Verbinden der ersten Ausgangswelle mit dem Planetenträger, bzw. der Eingangswelle (durch Schließen des zweiten und Öffnen des ersten Schaltelements) das Lastschaltgetriebe im Durchtriebsmodus betreibbar ist. Durch Verbinden der ersten Ausgangswelle mit dem ausgangsseitigen Sonnenrad (durch Schließen des ersten und Öffnen des zweiten Schaltelements) kann das Lastschaltgetriebe im Untersetzungsmodus betrieben werden.
Der Stufenplanetensatz und die Sonnenräder können derart ausgebildet sein, dass das Lastschaltgetriebe im Durchtriebsmodus oder im Kriechgangmodus betreibbar ist. In dieser Ausbildung ist das mit dem eingangsseitigen Sonnenrad kämmende Planetenrad des Stufenplanetensatzes kleiner ausgebildet als das mit dem ausgangsseitigen Sonnenrad kämmende Planetenrad des Stufenplanetensatzes, wobei durch Verbinden der ersten Ausgangswelle mit dem Planetenträger (durch Schließen des zweiten und Öffnen des ersten Schaltelements) das Lastschaltgetriebe im Durchtriebsmodus betrieben werden kann. Durch Verbinden der ersten Ausgangswelle mit dem ausgangsseitigen Sonnenrad (durch Schließen des ersten und Öffnen des zweiten Schaltelements) kann das Lastschaltgetriebe im Kriechgangmodus betrieben werden.

Der Stufenplanetensatz und die Sonnenräder können derart ausgebildet sein, dass das Lastschaltgetriebe im Durchtriebsmodus oder im Reversiermodus betreibbar ist. In dieser Ausbildung ist das mit dem eingangsseitigen Sonnenrad kämmende Planetenrad des Stufenplanetensatzes kleiner ausgebildet als das mit dem ausgangsseitigen Sonnenrad kämmende Planetenrad des Stufenplanetensatzes, wobei durch Verbinden der ersten Ausgangswelle mit dem Planetenträger (durch Schließen des zweiten und Öffnen des ersten Schaltelements) das Lastschaltgetriebe im Durchtriebsmodus betrieben werden kann. Durch Verbinden der ersten Ausgangswelle mit dem ausgangsseitigen Sonnenrad (durch Schließen des ersten und Öffnen des zweiten Schaltelements) kann das Lastschaltgetriebe im Reversiermodus betrieben werden.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: ein Getriebeschema für ein erfindungsgemäßes Lastschaltgetriebe in einer ersten Ausführungsform,
- Fig. 2: ein Getriebeschema für ein erfindungsgemäßes Lastschaltgetriebe in einer zweiten Ausführungsform und
- Fig. 3: ein Getriebeschema für ein erfindungsgemäßes Lastschaltgetriebe in einer dritten Ausführungsform.

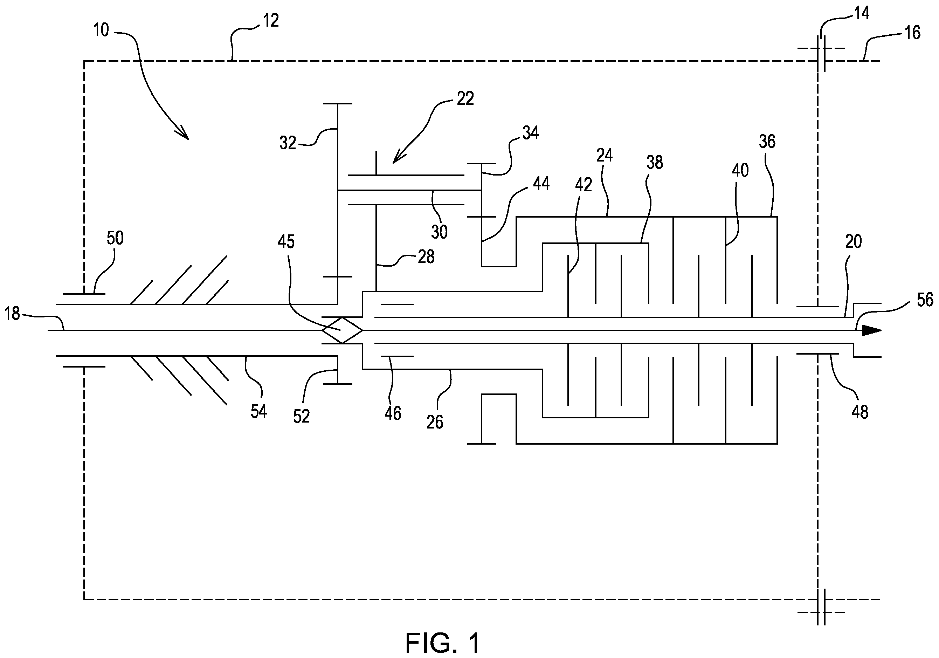

Das in Figur 1 dargestellte Lastschaltgetriebe 10 ist als variables Baukastengetriebe ausgebildet und umfasst ein Gehäuse 12, welches beispielsweise über eine Flanschverbindung 14 an ein Hauptgetriebegehäuse 16 angeflanscht werden und mit einem Hauptgetriebemodul (nicht gezeigt) eines landwirtschaftlichen Fahrzeugs, beispielsweise eines Traktors bzw. Schleppers, kombiniert werden kann.

Das Lastschaltgetriebe 10 umfasst eine Eingangswelle 18 und eine erste Ausgangswelle 20, die über ein Planetengetriebe 22, sowie über ein erstes und ein zweites Schaltelement 24, 26 in Antriebsverbindung gebracht werden kann.

Das Planetengetriebe 22 weist einen Planententräger 28 auf, auf dem ein zweistufiger Planetensatz 30 drehbar gelagert ist. Der zweistufige Planetensatz 30 umfasst ein eingangsseitiges Planetenrad 32 sowie ein ausgangsseitiges Planetenrad 34.

Die Schaltelemente 24, 26 sind jeweils als Lamellenkupplungen ausgebildet und weisen jeweils einen drehbar auf der ersten Ausgangswelle 20 gelagerten Kupplungsgehäuseteil 36 bzw. 38 auf, der jeweils über eine in Eingriff bringbare Lamellenanordnung 40 bzw. 42 mit der ersten Ausgangswelle 20 drehfest verbindbar ist. Die Schaltelemente 24, 26 sind dabei koaxial zur ersten Ausgangswelle 20 angeordnet, wobei der Kupplungsgehäuseteil 38 des zweiten Schaltelements 26 in dem Kupplungsgehäuseteil 36 des ersten Schaltelements 24 gelagert ist.

Der Kupplungsgehäuseteil 36 des ersten Schaltelements 24 ist drehfest mit einem ausgangsseitigen Sonnenrad 44 verbunden. Der Kupplungsgehäuseteil 38 des zweiten Schaltelements 26 ist drehfest mit dem Planetenträger 28 verbunden. Durch Schließen der Lamellenanordnung 40 bzw. 42 wird das ausgangsseitige Sonnenrad 44 bzw. der Planetenträger 28 wahlweise drehfest mit der ersten Ausgangswelle 20 verbunden.

Der Planetenträger 28, sowie der Kupplungsgehäuseteil 38 des ersten Schaltelements 26 sind über eine starre Kupplungsanordnung 45 drehfest mit der Eingangswelle 18 verbunden, wobei der Kupplungsgehäuseteil 38 über ein erstes Wälzlager 46 auf der ersten Ausgangswelle 20 gelagert ist. Die erste Ausgangswelle 20 ist über ein zweites Wälzlager 48 ausgangsseitig am Gehäuse 12 gelagert. Ein drittes Wälzlager 50 ist eingangsseitig am Gehäuse 12 ausgebildet.

Ein eingangsseitiges Sonnenrad 52 ist drehfest am Gehäuse 12 angeordnet, wobei das eingangsseitige Sonnenrad 52 als verzahnte Hohlwelle 54 ausgebildet ist, durch welche sich die Eingangswelle koaxial 18 erstreckt. Durch die eingangsseitige Hohlwelle 48 erstreckt sich koaxial die Eingangswelle 18, welche über die Kupplungsanordnung 45 drehfest mit dem Planententräger 28 und dem Kupplungsgehäuseteil 38 des ersten Schaltelements 26 verbunden ist.

Die erste Ausgangswelle 20 ist als Hohlwelle ausgebildet, durch welche sich eine zweite Ausgangswelle 56 erstreckt, welche drehfest über die starre Kupplungsanordnung 45 mit der Eingangswelle 18 verbunden ist.

Das Lastschaltgetriebe 12 ist als variabler Getriebebaukasten ausgebildet und kann für verschiedene Betriebsmodi ausgebildet bzw. auf verschiedene Betriebsmodi angepasst werden, in dem die Zahnradpaarungen zwischen eingangsseitigem Sonnenrad 52 und eingangsseitigem Planetenrad 32 bzw. ausgangsseitigem Sonnenrad 44 und ausgangsseitigem Planetenrad 34 verändert bzw. ausgetauscht werden.

Ausgehend von der Eingangsseite des Lastschaltgetriebes sind in einem ersten Ausführungsbeispiel Zahnradpaarungen mit folgenden Zähnezahlverhältnissen angeordnet:
- Das eingangsseitige Planetenrad 32 des Planetensatzes 30 kämmt mit dem eingangsseitigen Sonnenrad 52 in einem Zähnezahlverhältnis von 50/33.
- Das ausgangsseitige Planetenrad 34 des ersten Planetensatzes 30 kämmt mit dem ausgangsseitigen Sonnenrad 44 in einem Zähnezahlverhältnis von 16/67.

Durch Schalten (öffnen oder schließen) der Schaltelemente 24
und 26 (Kupplung 24, Kupplung 26) können nun folgende zwei Betriebsmodi für das Lastschaltgetriebe 10 erzielt werden. Durch Schließen des zweiten Schaltelements 26, sowie Öffnen des ersten Schaltelements 24, also durch Schließen der Kupplung 26 und Öffnen der Kupplung 24, ist ein erster Betriebsmodus herstellbar, in dem die Eingangswelle 18 über das zweite Schaltelement 26 direkt mit der ersten Ausgangswelle 20 verbunden ist, so dass Drehsinn und Drehzahl der Eingangswelle 18 und der ersten Ausgangswelle 20 gleich sind. Das Lastschaltgetriebe wird dann in dem sogenannten Durchtriebsmodus mit einem Übersetzungsverhältnis von i=1 und einem sich ergebenden Wirkungsgrad von 0,988 betrieben, was gegenüber gattungsgleichen herkömmlichen Lastschaltgetrieben eine deutliche Optimierung darstellt.

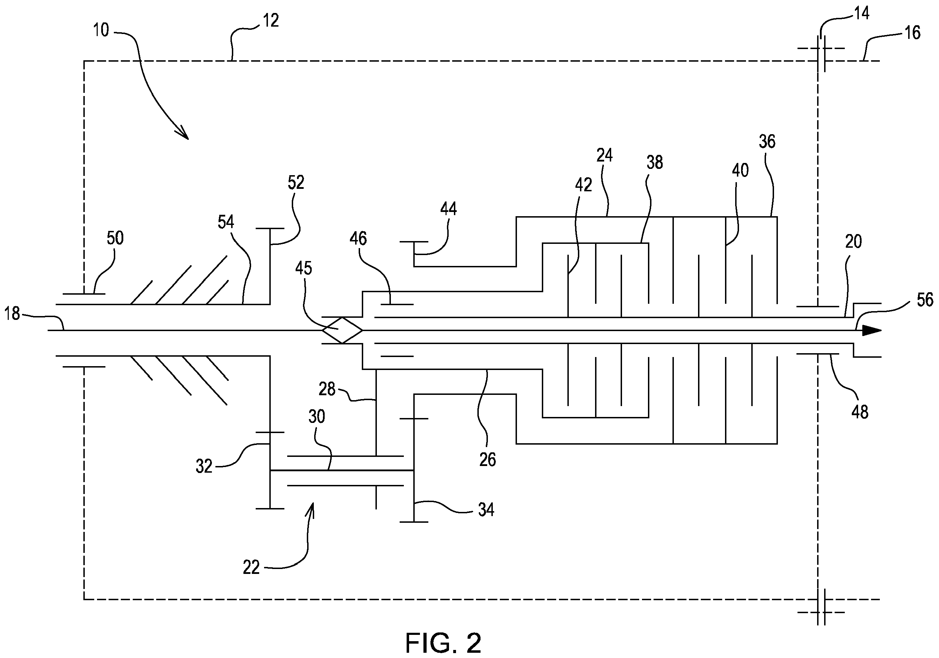

Durch Schließen des ersten Schaltelements 24 sowie Öffnen des zweiten Schaltelements 26, also durch Schließen der Kupplung 24 und Öffnen der Kupplung 26, ist ein zweiter Betriebsmodus herstellbar, in welchem die erste Ausgangswelle 20 über den Planetensatz 30 angetrieben wird, wobei aufgrund des blockierenden eingangsseitigen Sonnenrads 52 der Planetensatz 30 um das Sonnenrad 52 wälzt und der Abtrieb über die Zahnradpaarung des ausgangsseitigen Planetenrads 34 und des ausgangsseitigen Sonnenrads 44 in Verbindung mit dem ersten Schaltelement 24 (Kupplung 24) erfolgt, so dass Drehsinn der Eingangswelle 18 und der ersten Ausgangswelle 20 gleich und die Drehzahl verschieden sind. Das Lastschaltgetriebe wird dann in dem sogenannten Untersetzungsmodus mit einem Übersetzungsverhältnis von i=1,19 und einem sich ergebenden Wirkungsgrad von 0,992 betrieben, was ebenfalls gegenüber gattungsgleichen herkömmlichen Lastschaltgetrieben eine deutliche Optimierung darstellt.
In einem anderen Ausführungsbeispiel, wie in Figur 2 dargestellt ist, kann das Lastschaltgetriebe in einer anderen Paarung der Bertriebsmodi betrieben werden. Es werden dann folgende Zähnezahlverhältnisse angeordnet:
- Das eingangsseitige Planetenrad 32 des Planetensatzes 30 kämmt mit dem eingangsseitigen Sonnenrad 52 in einem Zähnezahlverhältnis von 22/61.
- Das ausgangsseitige Planetenrad 34 des ersten Planetensatzes 30 kämmt mit dem ausgangsseitigen Sonnenrad 44 in einem Zähnezahlverhältnis von 35/48.

Durch Schalten (öffnen oder schließen) der Schaltelemente 24 und 26 (Kupplung 24, Kupplung 26) können nun folgende zwei Betriebsmodi für das Lastschaltgetriebe 10 erzielt werden.

Durch Schließen des zweiten Schaltelements 26, sowie Öffnen des ersten Schaltelements 24, also durch Schließen der Kupplung 26 und Öffnen der Kupplung 24, ist ein erster Betriebsmodus herstellbar, in dem die Eingangswelle 18 über das zweite Schaltelement 26 direkt mit der ersten Ausgangswelle 20 verbunden ist, so dass Drehsinn und Drehzahl der Eingangswelle 18 und der ersten Ausgangswelle 20 gleich sind. Das Lastschaltgetriebe wird dann auch im Durchtriebsmodus mit einem Übersetzungsverhältnis von i=1 und einem sich ergebenden Wirkungsgrad von 0,988 betrieben.

Durch Schließen des ersten Schaltelements 24 sowie Öffnen des zweiten Schaltelements 26, also durch Schließen der Kupplung 24 und Öffnen der Kupplung 26, ist ein zweiter Betriebsmodus herstellbar, in welchem die erste Ausgangswelle 20 über den Planetensatz 30 angetrieben wird, wobei aufgrund des blockierenden eingangsseitigen Sonnenrads 52 der Planetensatz 30 um das Sonnenrad 52 wälzt und der Abtrieb über die Zahnradpaarung des ausgangsseitigen Planetenrads 34 und des ausgangsseitigen Sonnenrads 44 in Verbindung mit dem ersten Schaltelement 24 (Kupplung 24) erfolgt, so dass Drehsinn der Eingangswelle 18 und der ersten Ausgangswelle 20 verschieden sind. Das Lastschaltgetriebe wird dann in dem sogenannten Reversiermodus mit einem Übersetzungsverhältnis von i=-0,98 und einem sich ergebenden Wirkungsgrad von 0,918 betrieben.

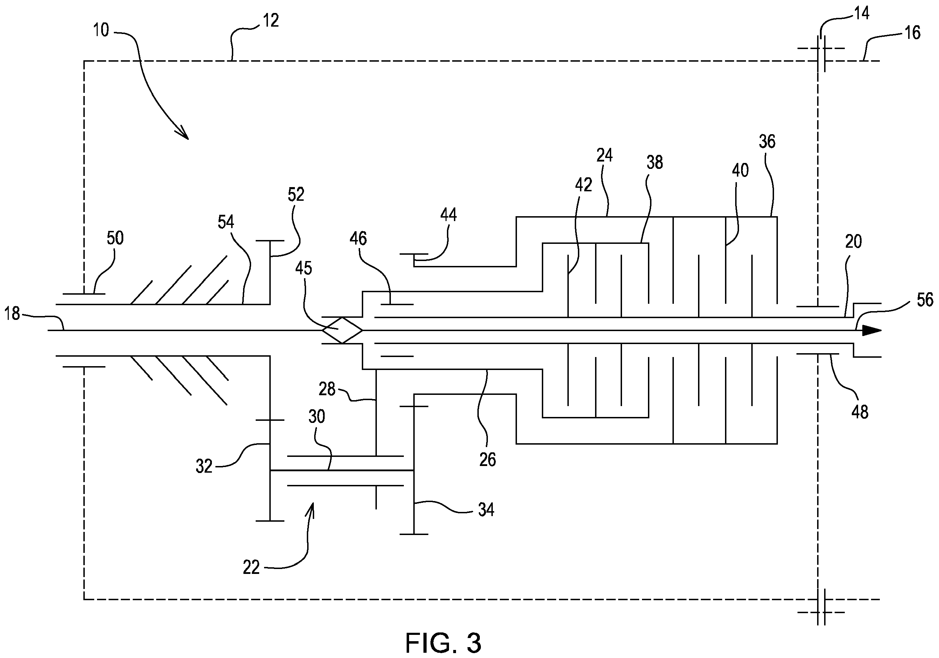

In einem weiteren anderen Ausführungsbeispiel, wie in Figur 3 dargestellt ist, kann das Lastschaltgetriebe wiederum in einer anderen Paarung der Bertriebsmodi betrieben werden. Es werden dann folgende Zähnezahlverhältnisse angeordnet:
- Das eingangsseitige Planetenrad 32 des Planetensatzes 30 kämmt mit dem eingangsseitigen Sonnenrad 52 in einem Zähnezahlverhältnis von 44/40.
- Das ausgangsseitige Planetenrad 34 des ersten Planetensatzes 30 kämmt mit dem ausgangsseitigen Sonnenrad 44 in einem Zähnezahlverhältnis von 46/38.

Durch Schalten (öffnen oder schließen) der Schaltelemente 24 und 26 (Kupplung 24, Kupplung 26) können nun folgende zwei Betriebsmodi für das Lastschaltgetriebe 10 erzielt werden.

Durch Schließen des zweiten Schaltelements 26, sowie Öffnen des ersten Schaltelements 24, also durch Schließen der Kupplung 26 und Öffnen der Kupplung 24, ist ein erster Betriebsmodus herstellbar, in dem die Eingangswelle 18 über das zweite Schaltelement 26 direkt mit der ersten Ausgangswelle 20 verbunden ist, so dass Drehsinn und Drehzahl der Eingangswelle 18 und der ersten Ausgangswelle 20 gleich sind. Das Lastschaltgetriebe wird dann auch im Durchtriebsmodus mit einem Übersetzungsverhältnis von i=1 und einem sich ergebenden Wirkungsgrad von 0,989 betrieben.

Durch Schließen des ersten Schaltelements 24 sowie Öffnen des zweiten Schaltelements 26, also durch Schließen der Kupplung 24 und Öffnen der Kupplung 26, ist ein zweiter Betriebsmodus herstellbar, in welchem die erste Ausgangswelle 20 über den Planetensatz 30 angetrieben wird, wobei aufgrund des blockierenden eingangsseitigen Sonnenrads 52 der Planetensatz 30 um das Sonnenrad 52 wälzt und der Abtrieb über die Zahnradpaarung des ausgangsseitigen Planetenrads 34 und des ausgangsseitigen Sonnenrads 44 in Verbindung mit dem ersten Schaltelement 24 (Kupplung 24) erfolgt, so dass Drehsinn der Eingangswelle 18 und der ersten Ausgangswelle 20 gleich sind und eine relativ hohe Untersetzung, also eine sehr viel geringere Drehzahl für die erste Ausgangswelle erzielt wird. Das Lastschaltgetriebe wird dann in dem sogenannten Kriechgangmodus mit einem Übersetzungsverhältnis von i=9,84 und einem sich ergebenden Wirkungsgrad von 0,727 betrieben.

Somit werden drei verschiedene Paarungen von Betriebsmodi ermöglicht, wobei in jedem Betriebsmodus jeweils eines der Schaltelemente 24, 26 geschlossen ist.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegend beanspruchte Erfindung fallen.

## Patentansprüche

1. Lastschaltgetriebe (10) mit einer Eingangswelle (18), einer koaxial zur Eingangswelle (18) angeordneten ersten Ausgangswelle (20), einem Planetengetriebe (22) mit einem mit der Eingangswelle (18) in Verbindung stehenden Planetenträger (28) und wenigstens einem Stufenplanetensatz (30), wobei der Stufenplanetensatz (30) eingangsseitig und ausgangsseitig mit jeweils einem Sonnenrad (52, 44) kämmt, und wenigstens zwei Schaltelementen (24, 26), **dadurch gekennzeichnet, dass** mit einem ersten Schaltelement (24) die erste Ausgangswelle (20) mit dem ausgangsseitigen Sonnenrad (44) des Stufenplanetensatzes (30) verbindbar ist und mit einem zweiten Schaltelement (26) die erste Ausgangswelle (20) direkt mit der Eingangswelle (18) verbindbar ist, wobei das eingangsseitige Sonnenrad (52) des Stufenplanetensatzes (30) drehfest mit einem Gehäuseteil (12) des Lastschaltgetriebes (10) verbunden ist.

2. Lastschaltgetriebe (10) nach Anspruch 1, **dadurch gekennzeichnet, dass** eine direkte Verbindung des ausgangsseitigen Sonnenrads (44) oder der Eingangswelle (18) mit der ersten Ausgangswelle (20), jeweils durch Schließen des entsprechenden Schaltelements (24, 26) herstellbar ist und für einen jeden Betriebsmodus des Lastschaltgetriebes (10) jeweils ein Schaltelement (24, 26) geschlossen ist.

3. Lastschaltgetriebe (10) nach einem der Ansprüche 1 oder 2, **dadurch gekennzeichnet, dass** das eingangsseitige Sonnenrad (52) koaxial zur Eingangswelle (18) angeordnet ist und sich die Eingangswelle (18) durch das eingangsseitige Sonnenrad (52) erstreckt.

4. Lastschaltgetriebe (10) nach einem der Ansprüche 1 bis 3, **dadurch gekennzeichnet, dass** die erste Ausgangswelle (20) als Hohlwelle ausgebildet ist, durch welche sich eine mit der Eingangswelle (18) verbundene zweite Ausgangswelle (56) erstreckt.

5. Lastschaltgetriebe (10) nach einem der Ansprüche 1 bis 4, **dadurch gekennzeichnet, dass** das erste und das zweite Schaltelement (24, 26) jeweils als Kupplung ausgebildet sind, wobei die eine Kupplung (36, 40) eingangsseitig mit dem ausgangsseitigen Sonnenrad (44) und ausgangsseitig mit der ersten Ausgangswelle (20) und die andere Kupplung (38, 42) eingangsseitig mit dem Planetenträger (28) und ausgangsseitig mit der ersten Ausgangswelle (20) drehfest verbunden sind.

6. Lastschaltgetriebe (10) nach einem der Ansprüche 1 bis 5, **dadurch gekennzeichnet, dass** der Stufenplanetensatz (30) und die Sonnenräder (52, 44) derart ausgebildet sind, dass das Lastschaltgetriebe (10) in einem Durchtriebsmodus oder in einem Untersetzungsmodus betreibbar ist.

7. Lastschaltgetriebe (10) nach einem der Ansprüche 1 bis 5, **dadurch gekennzeichnet, dass** der Stufenplanetensatz (30) und die Sonnenräder (52, 44) derart ausgebildet sind, dass das Lastschaltgetriebe (10) in einem Durchtriebsmodus oder in einem Kriechgangmodus betreibbar ist.

8. Lastschaltgetriebe (10) nach einem der Ansprüche 1 bis 5, **dadurch gekennzeichnet, dass** der Stufenplanetensatz (30) und die Sonnenräder (52, 44) derart ausgebildet sind, dass das Lastschaltgetriebe (10) in einem Durchtriebsmodus oder in einem Reversiermodus betreibbar ist.

## Claims

1. Power shift transmission (10) having an input shaft (18), a first output shaft (20) which is arranged coaxially with respect to the input shaft (18), a planetary gear mechanism (22) with a planetary carrier (28) which is connected to the input shaft (18) and at least one multi-step planet set (30), the multi-step planet set (30) meshing on the input side and on the output side with in each case one sun gear (52, 44), and at least two shifting elements (24, 26), **characterized in that** the first output shaft (20) can be connected by way of a first shifting element (24) to the output-side sun gear (44) of the multi-step planet set (30), and the first output shaft (20) can be connected by way of a second shifting element (26) directly to the input shaft (18), the input-side sun gear (52) of the multi-step planet set (30) being connected fixedly to a housing part (12) of the power shift transmission (10) so as to rotate with it.

2. Power shift transmission (10) according to Claim 1, **characterized in that** a direct connection of the output-side sun gear (44) or the input shaft (18) to the first output shaft (20) can be established in each case by way of closure of the corresponding shifting element (24, 26), and in each case one shifting element (24, 26) is closed for each operating mode.

3. Power shift transmission (10) according to either of Claims 1 and 2, **characterized in that** the input-side sun gear (52) is arranged coaxially with respect to the input shaft (18), and the input shaft (18) extends through the input-side sun gear (52).

4. Power shift transmission (10) according to one of Claims 1 to 3, **characterized in that** the first output shaft (20) is configured as a hollow shaft, through which a second output shaft (56) which is connected to the input shaft (18) extends.

5. Power shift transmission (10) according to one of Claims 1 to 4, **characterized in that** the first and the second shifting element (24, 26) are configured in each case as a clutch, the one clutch (36, 40) being connected on the input side to the output-side sun gear (44) and on the output side to the first output shaft (20) fixedly so as to rotate with them, and the other clutch (38, 42) being connected on the input side to the planetary carrier (28) and on the output side to the first output shaft (20) fixedly so as to rotate with them.

6. Power shift transmission (10) according to one of Claims 1 to 5, **characterized in that** the multi-step planet set (30) and the sun gears (52, 44) are arranged in such a way that the power shift transmission (10) can be operated in a through-connected drive mode or in a step-down mode.

7. Power shift transmission (10) according to one of Claims 1 to 5, **characterized in that** the multi-step planet set (30) and the sun gears (52, 44) are configured in such a way that the power shift transmission (10) can be operated in a through-connected drive mode or in a crawling gear mode.

8. Power shift transmission (10) according to one of Claims 1 to 5, **characterized in that** the multi-step planet set (30) and the sun gears (52, 44) are configured in such a way that the power shift transmission (10) can be operated in a through-connected drive mode or in a reversing mode.

## Revendications

1. Boîte de vitesses avec commande sous charge (10) avec un arbre d'entrée (18), un premier arbre de sortie (20) disposé de façon coaxiale à l'arbre d'entrée (18), un engrenage planétaire (22) avec un porte-satellites (28) monté en liaison avec l'arbre d'entrée (18) et au moins un ensemble de satellites de rapports (30), dans laquelle l'ensemble de satellites de rapports (30) engrène à l'entrée et à la sortie chaque fois avec une roue solaire (52, 44), et au moins deux éléments de commande (24, 26), **caractérisée en ce que** le premier arbre de sortie (20) peut être relié par un premier élément de commande (24) à la roue solaire de sortie (44) de l'ensemble de satellites de rapports (30) et le premier arbre de sortie (20) peut être relié par un deuxième élément de commande (26) directement à l'arbre d'entrée (18), dans laquelle la roue solaire d'entrée (52) de l'ensemble de satellites de rapports (30) est calée en rotation avec une partie de carter (12) de la boîte de vitesses avec commande sous charge (10).

2. Boîte de vitesses avec commande sous charge (10) selon la revendication 1, **caractérisée en ce qu'**une liaison directe de la roue solaire de sortie (44) ou de l'arbre d'entrée (18) avec le premier arbre de sortie (20) peut être établie respectivement par la fermeture de l'élément de commande correspondant (24, 26) et un élément de commande (24, 26) est respectivement fermé pour chaque mode de fonctionnement de la boîte de vitesses avec commande sous charge (10).

3. Boîte de vitesses avec commande sous charge (10) selon une des revendications 1 ou 2, **caractérisée en ce que** la roue solaire d'entrée (52) est disposée de façon coaxiale à l'arbre d'entrée (18) et l'arbre d'entrée (18) s'étend à travers la roue solaire d'entrée (52).

4. Boîte de vitesses avec commande sous charge (10) selon l'une quelconque des revendications 1 à 3, **caractérisée en ce que** le premier arbre de sortie (20) est formé par un arbre creux, à travers lequel s'étend un deuxième arbre de sortie (56) relié à l'arbre d'entrée (18).

5. Boîte de vitesses avec commande sous charge (10) selon l'une quelconque des revendications 1 à 4, **caractérisée en ce que** le premier et le deuxième éléments de commande (24, 26) sont respectivement réalisés sous forme d'embrayage, dans laquelle un premier embrayage (36, 40) est relié de façon solidaire en rotation à l'entrée à la roue solaire de sortie (44) et à la sortie au premier arbre de sortie (20) et l'autre embrayage (38, 42) est relié de façon solidaire en rotation à l'entrée au porte-satellites (28) et à la sortie au premier arbre de sortie (20).

6. Boîte de vitesses avec commande sous charge (10) selon l'une quelconque des revendications 1 à 5, **caractérisée en ce que** l'ensemble de satellites de rapports (30) et les roues solaires (52, 44) sont réalisés de telle manière que la boîte de vitesses avec commande sous charge (10) puisse fonctionner dans un mode d'entraînement ou dans un mode de réduction de vitesse.

7. Boîte de vitesses avec commande sous charge (10) selon l'une quelconque des revendications 1 à 5, **caractérisée en ce que** l'ensemble de satellites de rapports (30) et les roues solaires (52, 44) sont réalisés de telle manière que la boîte de vitesses avec commande sous charge (10) puisse fonctionner dans un mode d'entraînement ou dans un mode à vitesse réduite.

8. Boîte de vitesses avec commande sous charge (10) selon l'une quelconque des revendications 1 à 5, **caractérisée en ce que** l'ensemble de satellites de rapports (30) et les roues solaires (52, 44) sont réalisés de telle manière que la boîte de vitesses avec commande sous charge (10) puisse fonctionner dans un mode d'entraînement ou dans un mode réversible.
